# EUROPÄISCHE PATENTSCHRIFT

(11) **EP 1 873 410 B1**
(45) Veröffentlichungstag und Bekanntmachung des Hinweises auf die Patenterteilung: **24.12.2014**
(21) Anmeldenummer: 07011934.2
(22) Anmeldetag: 19.06.2007
(51) Int. Cl.: F16C 33/58

(54) **Laufbahnelement einer Radialwälzlagerung und Verfahren zur dessen Herstellung**
Race element of a radial roller bearing and method for its manufacture
Bague de roulement d'un roulement radial et procédé de fabrication de celui-ci

(30) Priorität: 30.06.2006 DE 102006030727
(43) Veröffentlichungstag der Anmeldung: 02.01.2008
(73) Patentinhaber: AB SKF, 415 50 Göteborg (SE)
(72) Erfinder: Schweitzer, Ferdinand, 3352 St. Peter/Au (AT)
(74) Vertreter: Kohl, Thomas

(56) Entgegenhaltungen:
- DE-A1- 10 325 585

## Beschreibung

Die Erfindung betrifft ein Laufbahnelement einer Wälzlagerung und ein Verfahren zur Herstellung des Laufbahnelements.

Beispielsweise aus dem SKF Hauptkatalog vom Januar 2004 ist auf dessen Seiten 268 bis 272 der Ausbau von Lagern beschrieben. Dabei ist angegeben, dass zum Ausbau von Lagern mit fester Passung Werkzeuge und Hilfsmittel verwendet werden, die abhängig von Lagerart, Lagergröße und Art der Befestigung sind. Zum Ausbau von Lagern mit zylindrischer Bohrung kommt dabei ein mechanischer Ausbau in Frage, wobei kleine Lager mit einem Hammer und einem Metalldorn durch leichte ringsherum geführte Schläge gegen eine der Ringseitenflächen von ihrem Sitz getrieben werden können oder besser noch mit einem mechanischen Abziehwerkzeug abgezogen werden. Dabei sollten Abzieher unmittelbar an der Seitenfläche des auszubauenden Rings oder an einem dahinter liegenden Einbauteil, beispielsweise einem Labyrinthring, angesetzt werden. Der Ausbau gestaltet sich einfacher, wenn in den Wellen- und Gehäuseschultern Nuten für Abziehwerkzeuge vorgesehen werden oder Gewindebohrungen im Gehäuse für Abdrückschrauben vorhanden sind. Für große Lager kann das Druckölverfahren den Ausbau erheblich erleichtern. Dazu erforderliche Ölzufuhrbohrungen und Verteilungsnuten im Wellenzapfen müssen allerdings bereits bei der Konstruktion vorgesehen werden.

Schließlich kommen für den Ausbau von Zylinderrollenlagerinnenringen ohne Borde oder mit nur einem Bord ein Ausbau im angewärmten Zustand in Frage, wobei dazu besondere Induktionsanwärmgeräte verwendet werden.

Eine Aufgabe der Erfindung ist es daher, ein verbessertes Laufbahnelement einer Radialwälzlagerung derart zu schaffen, dass das Laufbahnelement selbst zum Erleichtern eines Ausbaus entsprechend hergerichtet ist und gleichzeitig ein unberechtigter oder unerlaubter Ausbau bzw. Ausbauversuch am Laufbahnelement identifizierbar ist.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet ein Laufbahnelement einer Radialwälzlagerung folgende Merkmale:
- Das Laufbahnelement umfasst wenigstens eine Laufbahn für darauf zum Abrollen vorgesehene Wälzkörper wenigstens einer Wälzkörperreihe,
- eine Stirnseite des Laufbahnelements umfasst wenigstens eine Höhlung, wobei die Höhlung zum Eingriff eines Teils eines Ausbauwerkzeugs zum Übertragen einer Ausbaukraft auf das Laufbahnelement vorgesehen ist, und
- auf wenigstens einem Teil einer Begrenzungsfläche der Höhlung ist ein Material aufgetragen, wobei das Material derart aufgetragen ist, dass bei einer Übertragung einer Ausbaukraft von dem Teil des Ausbauwerkzeugs auf die Höhlung bleibende Spuren an dem Material hinterlassen werden.

Dadurch, dass das Laufbahnelement an seiner Stirnseite besagte, insbesondere mehrere in Umfangsrichtung verteilt angeordnete Höhlungen aufweist, die insbesondere in einem mantelartigen Teil ihrer Begrenzungsfläche mit wenigstens einem Gewindegang versehen sind, ist ein Ausbau des Laufbahnelements in einfacher Art und Weise dadurch möglich, dass ein entsprechendes Ausbauwerkzeug in die Höhlungen einschraubbar ist und über ein entsprechendes Zielen am Ausbauwerkzeug aus seiner Einbauumgebung lösbar ist. Dadurch, dass auf wenigstens einen Teil der Begrenzungsfläche der Höhlungen ein Material aufgetragen ist, insbesondere ein farbiger Lack oder ein Siegellack, wird beim Einschrauben des Ausbauwerkzeugs dieses Material bestimmungsgemäß bleibend geschädigt, so dass bei einem Ausbau durch unautorisierte Personen in Folge der bleibenden Spuren am Materialauftrag der unautorisierte Ausbau am Laufbahnelement selbst eineindeutig nachweisbar ist. Dies hilft unter anderem bei der Rückverfolgbarkeit bezüglich einer Findung von Schadensursachen. Weiterhin ist es im Falle von Garantie- und Gewährleistungsansprüchen möglich, zwischen fachgerechter Handhabung auf der einen Seite und Manipulation bzw. unsachgemäßer Handhabung auf der anderen Seite zu unterscheiden.

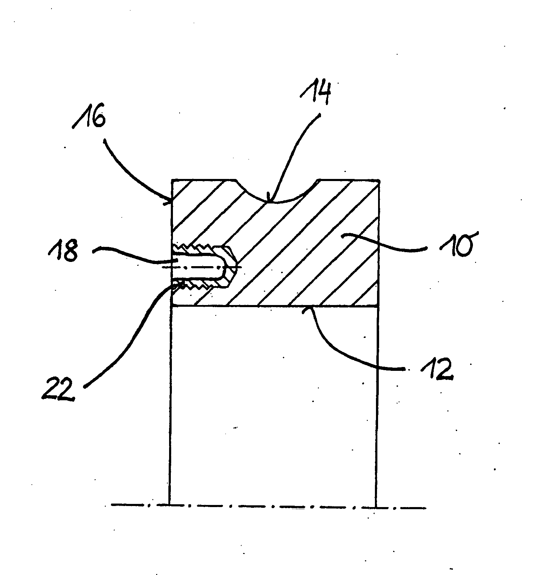

Weitere Vorteile, Merkmale und Einzelheiten der Erfindung ergeben sich aus dem im folgenden beschriebenen Ausführungsbeispiel der Erfindung anhand der Figur.

Die Figur zeigt als ein Ausführungsbeispiel der Erfindung einen Längsschnitt durch eine obere Hälfte eines Wälzlagerinnenrings 10. Der Wälzlagerinnenring 10 umfasst dabei einen zylindrischen Innenmantel 12, der mit fester Passung zum Befestigen, beispielsweise auf einer Welle vorgesehen ist. Der Außenmantel des Wälzlagerinnenrings 10 umfasst eine Laufbahn 14, auf der nicht dargestellte Wälzkörper zum Abrollen vorgesehen sind. Weiterhin umfasst der Wälzlagerinnenring 10 an wenigstens einer seiner Stirnseiten 16 mehrere in Umfangrichtung verteile Gewindebohrungen 18. Die Gewindebohrungen 18 können dabei beispielsweise als M4-Gewinde ausgebildet sein.

Bei der Montage wird der Wälzlagerinnenring 10 in an sich bekannter Art und Weise mit seinem zylindrischen Innenmantel 12 auf der Welle befestigt. Nach Abschluss der sachgemäße Montage durch entsprechend autorisiertes Fachpersonal werden dann die Gewindebohrungen 18 durch Einsprühen eines farbigen Lacks versiegelt, wodurch eine entsprechende Lackschicht 22 entsteht.

Für ein Ausbauen des Wälzlagerinnenrings 10, also insbesondere für ein Abziehen von der Welle, wird in besagte Gewindebohrungen 18 ein entsprechend ausgebildetes Ausbauwerkzeug eingeschraubt, wodurch die aufgebrachte Lackschicht 22 bestimmungsgemäß, bleibende Spuren an der Lackschicht 22 hinterlassend, beschädigt wird. Dabei kommt es beispielsweise zum Abreiben und/oder zum Verschleißen des Farbauftrags. Wird dabei der Ausbau beispielsweise in an sich unerlaubter oder unberechtigter Weise durch nicht autorisierte Personen durchgeführt, so ist dies dann am Wälzlagerinnenring 10 selbst durch die bleibenden Spuren an der Lackschicht 22 eindeutig nachweisbar, was unter anderem eine Rückverfolgbarkeit im Schadens- und/oder Reklamationsfall verbessert.

In anderen Ausführungsformen kann es sich anstelle des Wälzlagerinnenrings 10 natürlich auch um einen entsprechend ausgebildeten Wälzlageraußenring und/oder einen Mittenring einer Dringringwälzlagerung handeln.

### Bezugszeichenliste

- 10: Wälzlagerinnenring
- 12: Innenmantel
- 14: Laufbahn
- 16: Stirnseite
- 18: Gewindebohrung
- 22: Lackschicht

## Patentansprüche

1. Laufbahnelement einer Radialwälzlagerung, beinhaltend folgende Merkmale:
- Das Laufbahnelement umfasst wenigstens eine Laufbahn (14) für darauf zum Abrollen vorgesehene Wälzkörper wenigstens einer Wälzkörperreihe,
- eine Stirnseite (16) des Laufbahnelements umfasst wenigstens eine Höhlung (18), wobei die Höhlung zum Eingriff eines Teils eines Ausbauwerkzeugs zum Übertragen einer Ausbaukraft auf das Laufbahnelement vorgesehen ist, und
- auf wenigstens einem Teil einer Begrenzungsfläche der Höhlung (18) ist ein Material (22) aufgetragen, wobei das Material derart aufgetragen ist, dass bei einer Übertragung einer Ausbaukraft von dem Teil des Ausbauwerkzeugs auf die Höhlung bleibende Spuren an dem Material hinterlassen werden.

2. Laufbahnelement nach Anspruch 1, wobei die Höhlung (18) kreiszylinderförmig ist.

3. Laufbahnelement nach einem der Ansprüche 1 oder 2, wobei ein mantelartiger Teil der Begrenzungsfläche der Höhlung (18) mit wenigstens einem Gewindegang versehen ist.

4. Laufbahnelement nach einem der Ansprüche 1 bis 3, wobei der Materialauftrag sich wenigstens über einen mantelartigen Teil der Begrenzungsfläche erstreckt.

5. Laufbahnelement nach einem der Ansprüche 1 bis 4, wobei das Material (22) einen farbigen Lack oder Siegellack umfasst.

6. Laufbahnelement nach einem der Ansprüche 1 bis 5, wobei mehrere Höhlungen in Umfangsrichtung verteilt angeordnet sind.

7. Laufbahnelement nach einem der Ansprüche 1 bis 6, wobei eine Sitzfläche des Laufbahnelements, mit der es mit fester Passung in der Einbauumgebung befestigbar ist, zylindermantelartig oder kegelstumpfmantelartig ausgebildet ist.

8. Laufbahnelement nach einem der Ansprüche 1 bis 7, wobei das Laufbahnelement hohlzylinderartig oder ringartig ausgebildet ist.

9. Verfahren zum Herstellen eines Laufbahnelements nach einem der Ansprüche 1 bis 8, wobei das Material (22) einem Einbau des Laufbahnelements zeitlich nachfolgend aufgetragen wird.

10. Verfahren nach Anspruch 9, wobei das Material (22) aufgesprüht wird.

## Claims

1. Raceway element of a radial rolling bearing, containing the following features:
- the raceway element comprises at least one raceway (14) for rolling bodies of at least one rolling-body row which are intended to roll on it,
- one end face (16) of the raceway element comprises at least one cavity (18), the cavity being intended for the engagement of part of a demounting tool in order to transmit a demounting force to the raceway element, and
- a material (22) is applied to at least part of a boundary surface of the cavity (18), the material being applied in such a way that, when a demounting force is transmitted from the part of the demounting tool to the cavity, permanent traces are left behind on the material.

2. Raceway element according to Claim 1, the cavity (18) being circular-cylindrical.

3. Raceway element according to either one of Claims 1 and 2, a jacket-like part of the boundary surface of the cavity (18) being provided with at least one thread flight.

4. Raceway element according to one of Claims 1 to 3, the material application extending at least over a jacket-like part of the boundary surface.

5. Raceway element according to one of Claims 1 to 4, the material (22) comprising a coloured lacquer or sealing lacquer.

6. Raceway element according to one of Claims 1 to 5, a plurality of cavities being arranged, distributed in the circumferential direction.

7. Raceway element according to one of Claims 1 to 6, a seat surface of the raceway element, by means of which the latter can be fastened with a firm fit in the installation surroundings, is formed in the manner of a cylinder jacket or of the jacket of a truncated cone.

8. Raceway element according to one of Claims 1 to 7, the raceway element being formed in a manner of a hollow cylinder or of a ring.

9. Method for producing a raceway element according to one of Claims 1 to 8, the material (22) being applied subsequently in time to an installation of the raceway element.

10. Method according to Claim 9, the material (22) being sprayed on.

## Revendications

1. Élément de chemin de roulement d'un palier à roulement radial, présentant les caractéristiques suivantes :
- l'élément de chemin de roulement comporte au moins un chemin de roulement (14) pour des corps de roulement, prévus pour rouler sur celui-ci, d'au moins une rangée de corps de roulement,
- un côté frontal (16) de l'élément de chemin de roulement comporte au moins une cavité (18), la cavité étant prévue pour l'engagement d'une partie d'un outil de démontage en vue de la transmission d'une force de démontage à l'élément de chemin de roulement, et
- un matériau (22) est appliqué sur au moins une partie d'une surface de délimitation de la cavité (18), le matériau étant appliqué de telle sorte que, lors de la transmission d'une force de démontage de la partie de l'outil de démontage à la cavité, des traces permanentes soient laissées sur le matériau.

2. Élément de chemin de roulement selon la revendication 1, dans lequel la cavité (18) est de forme cylindrique circulaire.

3. Élément de chemin de roulement selon la revendication 1 ou 2, dans lequel une partie de type enveloppe de la surface de délimitation de la cavité (18) est pourvue d'au moins un filet.

4. Élément de chemin de roulement selon l'une quelconque des revendications 1 à 3, dans lequel l'application de matériau s'étend au moins sur une partie de type enveloppe de la surface de délimitation.

5. Élément de chemin de roulement selon l'une quelconque des revendications 1 à 4, dans lequel le matériau (22) comporte un vernis coloré ou un vernis de scellement.

6. Élément de chemin de roulement selon l'une quelconque des revendications 1 à 5, dans lequel plusieurs cavités sont disposées de manière répartie dans la direction périphérique.

7. Élément de chemin de roulement selon l'une quelconque des revendications 1 à 6, dans lequel une surface d'appui de l'élément de chemin de roulement, par laquelle il peut être fixé avec ajustement serré dans un environnement d'installation, est réalisée à la manière d'une enveloppe cylindrique ou à la manière d'une enveloppe tronconique.

8. Élément de chemin de roulement selon l'une quelconque des revendications 1 à 7, dans lequel l'élément de chemin de roulement est réalisé de manière cylindrique creuse ou de manière annulaire.

9. Procédé de fabrication d'un élément de chemin de roulement selon l'une quelconque des revendications 1 à 8, dans lequel le matériau (22) est appliqué de manière consécutive dans le temps à une installation de l'élément de chemin de roulement.

10. Procédé selon la revendication 9, dans lequel le matériau (22) est pulvérisé.
